(19) Europäisches Patentamt

European Patent Office

Office européen des brevets

(11) **EP 1 501 882 B1**

(12) **EUROPÄISCHE PATENTSCHRIFT**

(45) Veröffentlichungstag und Bekanntmachung des Hinweises auf die Patenterteilung:
**25.10.2006 Patentblatt 2006/43**

(21) Anmeldenummer: **03729931.0**

(22) Anmeldetag: **22.04.2003**

(51) Int Cl.:
**C08G 63/02** *(2006.01)*      **C08G 63/12** *(2006.01)*
**C08G 63/60** *(2006.01)*      **C08G 63/40** *(2006.01)*
**C08G 63/87** *(2006.01)*      **C08G 63/80** *(2006.01)*

(86) Internationale Anmeldenummer:
**PCT/EP2003/004121**

(87) Internationale Veröffentlichungsnummer:
**WO 2003/093343 (13.11.2003 Gazette 2003/46)**

(54) **VERFAHREN ZUR HERSTELLUNG HOCHFUNKTIONELLER, HYPERVERZWEIGTER POLYESTER**

METHOD FOR PRODUCING HIGHLY FUNCTIONAL, HYPERBRANCHED POLYESTERS

PROCEDE DE PRODUCTION DE POLYESTERS HYPERRAMIFIES A HAUTE FONCTIONNALITE

(84) Benannte Vertragsstaaten:
**AT BE BG CH CY CZ DE DK EE ES FI FR GB GR HU IE IT LI LU MC NL PT RO SE SI SK TR**

(30) Priorität: **30.04.2002 DE 10219508**

(43) Veröffentlichungstag der Anmeldung:
**02.02.2005 Patentblatt 2005/05**

(73) Patentinhaber: **BASF Aktiengesellschaft 67056 Ludwigshafen (DE)**

(72) Erfinder:
• **WAGNER, Eva 67346 Speyer (DE)**
• **BRUCHMANN, Bernd 67251 Freinsheim (DE)**
• **KELLER, Peter 66583 Spiesen-Elversberg (DE)**

(56) Entgegenhaltungen:
EP-A- 0 680 981          WO-A-03/054204
US-A- 4 668 763          US-A- 4 749 728
US-A- 5 663 281

• **PATENT ABSTRACTS OF JAPAN vol. 012, no. 446 (C-546), 24. November 1988 (1988-11-24) & JP 63 172727 A (MITSUBISHI RAYON CO LTD), 16. Juli 1988 (1988-07-16)**

• **DATABASE WPI Section Ch, Week 200048 Derwent Publications Ltd., London, GB; Class A21, AN 2000-524951 XP002247805 & CN 1 255 486 A (INST CHEM CHINESE ACAD SCI), 7. Juni 2000 (2000-06-07)**

**Beschreibung**

Die vorliegenden Erfindung betrifft ein Verfahren zur Herstellung hochfunktioneller, hyperverzweigter Polyester, dadurch gekennzeichnet, dass man

(a) eine oder mehrere Dicarbonsäuren oder eines oder mehrere Derivate derselben mit einem oder mehreren mindestens trifunktionellen Alkoholen
oder

(b) eine oder mehrere Tricarbonsäuren oder höhere Polycarbonsäuren oder eines oder mehrere Derivate derselben mit einem oder mehreren Diolen

in Gegenwart eines Lösemittels und optional in Gegenwart eines anorganischen, metallorganischen oder organischen Katalysators umsetzt.

Weiterhin betrifft die vorliegende Erfindung hochfunktionelle, hyperverzweigte Polyester, erhältlich nach dem oben beschrieben Verfahren, und die Verwendung der so erhaltenen hochfunktionellen, hyperverzweigten Polyester in Beschichtungen, Lacken, Überzügen und Klebstoffen sowie Druckfarben.

Modifizierte hochfunktionelle hyperverzweigte Polyester und Dendrimere auf Polyesterbasis sind als solche bekannt, siehe beispielsweise WO 96/19537, und werden bereits in einigen Anwendungen gebraucht, so beispielsweise als Schlagzähmodifikator. Dendrimere sind jedoch für den allgemeinen Gebrauch zu teuer, weil die Synthesen hohe Anforderungen an Ausbeuten der Aufbaureaktionen und Reinheit der Zwischen- und Endprodukte stellen und für den großtechnischen Gebrauch zu teure Reagenzien erfordern. Die Herstellung von durch konventionelle Veresterungsreaktionen hergestellten hyperverzweigten hochfunktionellen Polyestern erfordert üblicherweise recht drastische Bedingungen, vgl. WO 96/19537, beispielsweise hohe Temperaturen und/oder starke Säuren. Dadurch kann es zu Nebenreaktionen wie beispielsweise Dehydratisationsreaktionen, Decarboxylationen und als Folge der Nebenreaktionen zu unerwünschten Verharzungen und Verfärbungen kommen.

Als Veresterungsverfahren, die unter milden Bedingungen ablaufen können, sind einerseits solche unter Einsatz sehr teurer Aktivierungsreagenzien bekannt, wie beispielsweise Dicyclohexyldicarbodiimid, weiterhin der Einsatz von Schutzgruppenchemie, die aber in großtechnischen Reaktionen unrentabel ist, und andererseits enzymatische Reaktionen, die jedoch nicht die gewünschten Produkte liefern. So ist aus GB 2 272 904 ein Verfahren zur Lipasekatalysierten Herstellung eines Polyesters bekannt, bei dem mindestens eine aliphatische Dicarbonsäure mit mindestens einem aliphatischen Diol oder Polyol oder mindestens eine aliphatische Hydroxycarbonsäure mit sich selbst zu Polyestern umgesetzt wird. Das Verfahren wird bei Temperaturen von 10 bis 60°C, bevorzugt bei 40 bis 45°C durchgeführt und liefert - auch beim Einsatz von Glycerin - bevorzugt unverzweigte Polyester (Seite 3, Zeile 26/27). Das in GB 2 272 904 offengelegte Verfahren lässt sich daher zum gezielten Aufbau von linearen Polymeren nutzen. Pentaerythrit lässt sich in GB 2 272 904 offenbarten Verfahren nicht umsetzen (Seite 3, Zeile 28). Das Beispiel demonstriert die Synthese eines linearen Polyesters aus Adipinsäure und Butan-1,4-diol.

In WO 94/12652 wird ein Verfahren zur enzymkatalysierten Synthese von Polyestern offenbart, das in Abwesenheit von Lösemitteln durchgeführt wird (Seite 3, Zeile 26). Dabei lassen sich zwei Verfahrensschritte unterscheiden. Im ersten Schritt werden aus Diolen und Dicarbonsäuren oder verwandten Produkten enzymatisch Oligomere hergestellt. Anschließend wird das Enzym entweder zurückgewonnen und die Reaktion bei erhöhter Temperatur fortgesetzt, oder man lässt das Enzym in der Reaktionsmischung und erhöht die Temperatur, wobei man eine möglicherweise irreversible Zerstörung des Enzyms in Kauf nimmt.

In WO 98/55642 wird ein spezielles Verfahren zur enzymkatalysierten Synthese von Polyestern durch Umsetzung von entweder Hydroxycarbonsäuren oder aber aliphatischen Dicarbonsäuren mit aliphatischen Diolen oder Polyolen und optional eine aliphatische Hydroxycarbonsäure in einem Zweistufenverfahren, wobei man in der ersten Stufe - optional in Gegenwart von Wasser - die Ausgangsprodukte in einem molaren Verhältnis von 1:1 bis 1,1:1 umsetzt und wobei die zweite Stufe bei erhöhter Temperatur durchgeführt wird. Durch das offenbarte Verfahren werden sterisch gehinderte sekundäre Hydroxylgruppen nicht umgesetzt (Seite 7, Zeile 27/28), wobei die sekundäre Hydroxylgruppe von beispielsweise Glycerin als sterisch gehindert einzuordnen ist (Seite 8, Zeile 4), so dass bei der Umsetzung von Glycerin lineare Produkte erhalten werden. WO 99/46397 offenbart die Synthese von Polyestern durch Umsetzung von beispielsweise eines Polyols mit zwei primären und mindestens einer sekundären Alkoholfunktion mit einer oder mehreren Di- oder Tricarbonsäuren in Gegenwart einer effektiven Menge einer Lipase, wobei bevorzugt bei reduziertem Druck gearbeitet wird, so dass man lineare Polyester erhält. L.E. Iglesias *et al.* berichten in *Biotechnology Techniques* 1999, *13*, 923, dass man lineare Polyester erhält, wenn man Glycerin mit Adipinsäure in Gegenwart eines Enzyms bei 30°C verestert. B.I. Kline *et al.* berichten in *Polymer Mat. Sci. Eng.* 1998, *79*, 35, dass man lineare Polyester erhält, wenn man Glycerin mit Adipinsäuredivinylester in Gegenwart eines Enzyms bei 50°C umsetzt.

Die oben beschriebenen enzymatisch katalysierten Reaktionen haben jedoch den Nachteil, dass sie üblicherweise recht langsam ablaufen. So betragen die Reaktionszeiten meist viele Stunden bis zu einigen Tagen.

Es ist auch bekannt, Polyhydroxyverbindungen mit Polycarbonsäuren in der Schmelze umzusetzen. So ist in US 4,749,728 ein Verfahren zur Herstellung eines Polyesters aus Trimethylolpropan und Adipinsäure (OH : COOH 3: 1), bei 190°C beschrieben. Das beschriebene Verfahren wird in Abwesenheit von Lösemitteln und Katalysatoren durchgeführt. Das bei der Reaktion gebildete Wasser bzw. der Ethanol wird durch einfaches Abdestillieren entfernt. Die so erhaltenen Produkte lassen sich beispielsweise mit Epoxiden umsetzen und zu thermisch aushärtenden Beschichtungssystemen verarbeiten.

Aus US 4,880,980 sind Verfahren zur Herstellung von Polyestern aus Trimethylolpropan und Adipinsäure bekannt, wobei Trimethylolpropan und Adipinsäure unter Stickstoffatmosphäre in Abwesenheit eines Lösemittels auf 220°C erhitzt werden (Referenzbeispiel 8, Spalte 8). Das bei der Reaktion gebildete Wasser wird durch Einleiten von Stickstoff in die Schmelze ausgetragen.

Aus EP-A 0 680 981 ist ein Verfahren zur Synthese von Polyesterpolyolen bekannt, das darin besteht, dass man ein Polyol, beispielsweise Glycerin, sowie Adipinsäure in einem Verhältnis (OH : COOH 3:1) in Abwesenheit von Katalysatoren und Lösemitteln auf 150-160°C erhitzt. Man erhält Produkte, die sich als Polyesterpolyolkomponente von Polyurethanhartschäumen eignen.

Aus WO 98/17123 ist ein Verfahren zur Veresterung von Glycerin mit Adipinsäure zu Polymeren bekannt, die in Kaugummi eingesetzt werden. Sie werden erhalten durch eine lösemittelfreies Verfahren der Veresterung von Glycerin mit Adipinsäure bei 150°C (Beispiel A). Ein Katalysator wird nicht eingesetzt. Nach 4 Stunden beginnen sich Gele zu bilden. Gelartige Polyesterpolyole sind jedoch für zahlreiche Anwendungen wie beispielsweise Druckfarben und Klebstoffe unerwünscht, weil sie zur Klümpchenbildung führen können und die Dispergiereigenschaften mindern.

Die durch die oben beschriebenen Verfahren erhaltenen Produkte lassen sich im Allgemeinen nur schlecht als Komponente für Klebstoffe oder Druckfarben verwenden, weil sie in der Regel unerwünschte gelartige Produkte sind. Außerdem sind sie in der Regel verfärbt, was durch Verharzungen, Decarboxylierungen, intramolekulare Kondensationsreaktionen oder ähnliche unerwünschte Nebenreaktionen verursacht wird. Schließlich weisen die Reaktionsgemische im Allgemeinen einen hohen Überschuss an OH-Gruppen, bezogen auf die COOH-Gruppen, auf, so dass man zu wenig verzweigten Produkten gelangt.

Es bestand daher die Aufgabe, ein Verfahren zur Herstellung von hochfunktionellen, hyperverzweigten Polyestern bereit zu stellen, das die aus dem Stand der Technik bekannten Nachteile vermeidet. Es bestand weiterhin die Aufgabe, neue hochfunktionelle, hyperverzweigte Polyester, bereit zu stellen. Schließlich bestand die Aufgabe, neue Verwendungen für hochfunktionelle, hyperverzweigte Polyester bereit zu stellen.

Es wurde nun überraschend gefunden, dass die Aufgabe durch das eingangs definierte Verfahren gelöst werden kann.

Durch das erfindungsgemäße Verfahren werden ist dadurch gekennzeichnet, dass man

(a) eine oder mehrere Dicarbonsäuren oder eines oder mehrere Derivate derselben mit einem oder mehreren mindestens trifunktionellen Alkoholen

oder

(b) eine oder mehrere Tricarbonsäuren oder höhere Polycarbonsäuren oder eines oder mehrere Derivate derselben mit einem oder mehreren Diolen

in Gegenwart eines Lösemittels und optional in Gegenwart eines anorganischen, metallorganischen oder niedermolekularen organischen Katalysators umsetzt.

Hochfunktionelle hyperverzweigte Polyester im Sinne der vorliegenden Erfindung sind molekular und strukturell uneinheitlich. Sie unterscheiden sich durch ihre molekulare Uneinheitlichkeit von Dendrimeren und sind daher mit erheblich geringerem Aufwand herzustellen.

Zu den nach Variante (a) umsetzbaren Dicarbonsäuren gehören beispielsweise Oxalsäure, Malonsäure, Bernsteinsäure, Glutarsäure, Adipinsäure, Pimelinsäure, Korksäure, Azelainsäure, Sebacinsäure, Undecan-$\alpha,\omega$-dicarbonsäure, Dodecan-$\alpha,\omega$-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure sowie cis- und trans-Cyclopentan-1,3-dicarbonsäure,

wobei die oben genannten Dicarbonsäuren substituiert sein können mit einem oder mehreren Resten, ausgewählt aus $C_1$-$C_{10}$-Alkylgruppen, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,

$C_3$-$C_{12}$-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl; Alkylengruppen wie Methylen oder Ethyliden oder

$C_6$-$C_{14}$-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, Itaconsäure, 3,3-Dimethylglutarsäure.

Weiterhin gehören zu den nach Variante (a) umsetzbaren Dicarbonsäuren ethylenisch ungesättigte Säuren wie beispielsweise Maleinsäure und Fumarsäure sowie aromatische Dicarbonsäuren wie beispielsweise Phthalsäure, Isophthalsäure oder Terephthalsäure.

Weiterhin lassen sich Gemische von zwei oder mehreren der vorgenannten Vertreter einsetzen.

Die Dicarbonsäuren lassen sich entweder als solche oder in Form von Derivaten einsetzen.

Unter Derivaten werden bevorzugt verstanden

- die betreffenden Anhydride in monomerer oder auch polymerer Form,

- Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester,

- ferner Mono- und Divinylester sowie

- gemischte Ester, bevorzugt Methylethylester.

Im Rahmen der vorliegenden Erfindung ist es auch möglich, ein Gemisch aus einer Dicarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Dicarbonsäuren einzusetzen.

Besonders bevorzugt setzt man Bernsteinsäure, Glutarsäure, Adipinsäure, Phthalsäure, Isophthalsäure, Terephthalsäure oder deren Mono- oder Dimethylester ein. Ganz besonders bevorzugt setzt man Adipinsäure ein.

Als mindestens trifunktionelle Alkohole lassen sich beispielsweise umsetzen: Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, Trimethylolbutan, Trimethylolpropan oder Di-Trimethylolpropan, Trimethylolethan, Pentaerythrit oder Dipentaerythrit; Zuckeralkohole wie beispielsweise Mesoerythrit, Threitol, Sorbit, Mannit oder Gemische der vorstehenden mindestens trifunktionellen Alkohole. Bevorzugt verwendet man Glycerin, Trimethylolpropan, Trimethylolethan und Pentaerythrit.

Nach Variante (b) umsetzbare Tricarbonsäuren oder Polycarbonsäuren sind beispielsweise 1,2,4-Benzoltricarbonsäure, 1,3,5-Benzoltricarbonsäure, 1,2,4,5-Benzoltetracarbonsäure sowie Mellitsäure.

Tricarbonsäuren oder Polycarbonsäuren lassen sich in der erfindungsgemäßen Reaktion entweder als solche oder aber in Form von Derivaten einsetzen.

Unter Derivaten werden bevorzugt verstanden

- die betreffenden Anhydride in monomerer oder auch polymerer Form,

- Mono-, Di- oder Trialkylester, bevorzugt Mono-, Di- oder Trimethylester oder die entsprechenden Mono-, Di- oder Triethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- Di- und Triester, ferner Mono-, Di- oder Trivinylester

- sowie gemischte Methylethylester.

Im Rahmen der vorliegenden Erfindung ist es auch möglich, ein Gemisch aus einer Tri- oder Polycarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Tri- oder Polycarbonsäuren einzusetzen.

Als Diole für Variante (b) der vorliegenden Erfindung verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,10-Decandiol, 1,2-Decandiol, 1,12-Dodecandiol, 1,2-Dodecandiol, 1,5-Hexadien-3,4-diol, Cyclopentandiole, Cyclohexandiole, Inositol und Derivate, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole $HO(CH_2CH_2O)_n$-H oder Polypropylenglykole $HO(CH[CH_3]CH_2O)_n$-H oder Gemische

von zwei oder mehr Vertretern der voranstehenden Verbindungen, wobei n eine ganze Zahl ist und n = 4. Dabei kann eine oder auch beide Hydroxylgruppen in den vorstehend genannten Diolen auch durch SH-Gruppen substituiert werden. Bevorzugt sind Ethylenglykol, Propan-1,2-diol sowie Diethylenglykol, Triethylenglykol, Dipropylenglykol und Tripropylenglykol.

Die Molverhältnis Hydroxylgruppen zu Carboxylgruppen bei den Varianten (a) und (b) betragen 2:1 bis 1:2, insbesondere 1,5:1 bis 1:1,5.

Die nach Variante (a) des erfindungsgemäßen Verfahrens umgesetzten mindestens trifunktionellen Alkohole können Hydroxylgruppen jeweils gleicher Reaktivität aufweisen. Bevorzugt sind hier auch mindestens trifunktionelle Alkohole, deren OH-Gruppen zunächst gleich reaktiv sind, bei denen sich jedoch durch Reaktion mit mindestens einer Säuregruppe ein Reaktivitätsabfall, bedingt durch sterische oder elektronische Einflüsse, bei den restlichen OH-Gruppen induzieren lässt. Dies ist beispielsweise bei der Verwendung von Trimethylolpropan oder Pentaerythrit der Fall.

Die nach Variante (a) des erfindungsgemäßen Verfahrens umgesetzten mindestens trifunktionellen Alkohole können aber auch Hydroxylgruppen mit mindestens zwei chemisch unterschiedlichen Reaktivitäten aufweisen.

Die unterschiedliche Reaktivität der funktionellen Gruppen kann dabei entweder auf chemischen (z.B. primäre/sekundäre/tertiäre OH Gruppe) oder auf sterischen Ursachen beruhen.

Beispielsweise kann es sich bei dem Triol um ein Triol handeln, welches primäre und sekundäre Hydroxylgruppen aufweist, bevorzugtes Beispiel ist Glycerin.

Bei der Durchführung der erfindungsgemäßen Umsetzung nach Variante (a) arbeitet man bevorzugt in Abwesenheit von Diolen und monofunktionellen Alkoholen.

Bei der Durchführung der erfindungsgemäßen Umsetzung nach Variante (b) arbeitet man bevorzugt in Abwesenheit von mono- oder Dicarbonsäuren.

Das erfindungsgemäße Verfahren wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01 bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauern führt.

Zur Durchführung des erfindungsgemäßen Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, $MgSO_4$ und $Na_2SO_4$. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen.

Man kann das erfindungsgemäße Verfahren in Abwesenheit von sauren Katalysatoren durchführen. Vorzugsweise arbeitet man in Gegenwart eines sauren anorganischen, metallorganischen oder organischen Katalysators oder Gemischen aus mehreren sauren anorganischen, metallorganischen oder organischen Katalysatoren.

Als saure anorganische Katalysatoren im Sinne der vorliegenden Erfindung sind beispielsweise Schwefelsäure, Phosphorsäure, Phosphonsäure, hypophosphorige Säure, Aluminiumsulfathydrat, Alaun, saures Kieselgel (pH =6, insbesondere = 5) und saures Aluminiumoxid zu nennen. Weiterhin sind beispielsweise Alumiumverbindungen der allgemeinen Formel $Al(OR)_3$ und Titanate der allgemeinen Formel $Ti(OR)_4$ als saure anorganische Katalysatoren einsetzbar, wobei die Reste R jeweils gleich oder verschieden sein können und unabhängig voneinander gewählt sind aus $C_1$-$C_{10}$-Alkylresten, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl, $C_3$-$C_{12}$-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R in $Al(OR)_3$ bzw. $Ti(OR)_4$ jeweils gleich und gewählt aus Isopropyl oder 2-Ethylhexyl.

Bevorzugte saure metallorganische Katalysatoren sind beispielsweise gewählt aus Dialkylzinnoxiden $R_2SnO$, wobei R wie oben stehend definiert ist. Ein besonders bevorzugter Vertreter für saure metallorganische Katalysatoren ist Di-n-butylzinnoxid, das als sogenanntes Oxo-Zinn kommerziell erhältlich ist.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form einzusetzen.

Wünscht man saure anorganische, metallorganische oder organische Katalysatoren einzusetzen, so setzt man erfindungsgemäß 0,1 bis 10 Gew.-%, bevorzugt 0,2 bis 2 Gew.-% Katalysator ein.

Enzyme oder Zersetzungsprodukte von Enzymen gehören nicht zu den sauren organischen Katalysatoren im Sinne der vorliegenden Erfindung. Gleichfalls gehören die erfindungsgemäß umgesetzten Dicarbonsäuren nicht zu den sauren organischen Katalysatoren im Sinne der vorliegenden Erfindung.

Zur Durchführung des erfindungsgemäßen Verfahren verzichtet man vorteilhaft auf den Einsatz von Enzymen.

Das erfindungsgemäße Verfahren wird unter Inertgasatmosphäre durchgeführt, das heißt beispielsweise unter Kohlendioxid, Stickstoff oder Edelgas, unter denen insbesondere Argon zu nennen ist.

Das erfindungsgemäße Verfahren wird bei Temperaturen von 80 bis 200°C durchgeführt. Vorzugsweise arbeitet man bei Temperaturen von 130 bis 180, insbesondere bis 150°C oder darunter. Besonders bevorzugt sind maximale Temperaturen bis 145°C, ganz besonders bevorzugt bis 135°C.

Die Druckbedingungen des erfindungsgemäßen Verfahrens sind an sich unkritisch. Man kann bei deutlich verringertem Druck arbeiten, beispielsweise bei 10 bis 500 mbar. Das erfindungsgemäße Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei Atmosphärendruck.

Die Umsetzungsdauer des erfindungsgemäßen Verfahrens beträgt üblicherweise 10 Minuten bis 25 Stunden, bevorzugt 30 Minuten bis 10 Stunden und besonders bevorzugt eine bis 8 Stunden.

Nach beendeter Reaktion lassen sich die hochfunktionellen hyperverzweigten Polyester leicht isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Ein weiterer Gegenstand der vorliegenden Erfindung sind die nach dem erfindungsgemäßen Verfahren erhältlichen hochfunktionellen, hyperverzweigten Polyester. Sie zeichnen sich durch besonders geringe Anteile an Verfärbungen und Verharzungen aus. Zur Definition von hyperverzweigten Polymeren siehe auch: P.J. Flory, J. Am. Chem. Soc. 1952, 74, 2718 und A. Sunder et al., Chem. Eur. J. 2000, 6, No.1, 1-8. Unter "hochfunktionell hyperverzweigt" wird im Zusammenhang mit der vorliegenden Erfindung jedoch verstanden, dass in 30 bis 70 mol-%, bevorzugt 40 bis 60 mol-% jeder Monomereinheit eine Verzweigung vorliegt.

Die erfindungsgemäßen Polyester haben ein Molekulargewicht $M_w$ von 2000 bis 50.000 g/mol, bevorzugt 3000 bis 20.000, besonders bevorzugt 3000 bis 7000 und ganz besonders bevorzugt 4000 g/mol.

Die Polydispersität beträgt 1,2 bis 50, bevorzugt 1,4 bis 40, besonders bevorzugt 1,5 bis 30 und ganz besonders bevorzugt bis 10. Sie sind üblicherweise her gut löslich, d.h. man kann klare Lösungen mit bis zu 50 Gew.-%, in einigen Fällen sogar bis zu 80 Gew.-%, der erfindungsgemäßen Polyester in Tetrahydrofuran (THF), n-Butylacetat, Ethanol und zahlreichen anderen Lösemitteln darstellen, ohne dass mit bloßem Auge Gelpartikel detektierbar sind.

Die erfindungsgemäßen hochfunktionellen hyperverzweigten Polyester sind carboxyterminiert, carboxy- und Hydroxylgruppen-terminiert und vorzugsweise Hydroxylgruppen-terminiert und können zur Herstellung z.B. von Klebstoffen, Druckfarben, Beschichtungen, Schaumstoffen, Überzügen und Lacken vorteilhaft eingesetzt werden.

Ein weiterer Aspekt der vorliegenden Erfindung ist die Verwendung der erfindungsgemäßen hochfunktionellen, hyperverzweigten Polyestern zur Herstellung von Polyadditions- oder Polykondensationsprodukten, beispielsweise Polycarbonaten, Polyurethanen und Polyethern. Bevorzugt ist die Verwendung der erfindungsgemäßen Hydroxylgruppenterminierten hochfunktionellen, hyperverzweigten Polyestern zur Herstellung von Polyadditions- oder Polykondensationsprodukten Polycarbonaten oder Polyurethanen.

Ein weiterer Aspekt der vorliegenden Erfindung ist die Verwendung der erfindungsgemäßen hochfunktionellen hyperverzweigten Polyester sowie der aus hochfunktionellen, hyperverzweigten Polyestern hergestellten Polyadditions- oder Polykondensationsprodukte als Komponente von Klebstoffen, Beschichtungen, Schaumstoffen, Überzügen und Lacken. Ein weiterer Aspekt der vorliegenden Erfindung sind Druckfarben, Klebstoffe, Beschichtungen, Schaumstoffe, Überzüge und Lacke, enthaltend die erfindungsgemäßen hochfunktionellen hyperverzweigten Polyester oder aus den erfindungsgemäßen hochfunktionellen, hyperverzweigten Polyestern hergestellte Polyadditions- oder Polykondensationsprodukte. Sie zeichnen sich durch hervorragende anwendungstechnische Eigenschaften aus.

Ein weiterer bevorzugter Aspekt der vorliegenden Erfindung sind Druckfarben, insbesondere Verpackungsdruckfarben für den Flexo- und/oder Tiefdruck, die mindestens ein Lösemittel oder ein Gemisch verschiedener Lösemittel, mindestens ein Farbmittel, mindestens ein polymeres Bindemittel sowie optional weitere Zusatzstoffe umfasst, wobei es sich bei mindestens einem der polymeren Bindemittel um einen erfindungsgemäßen hyperverzweigten hochfunktionellen Polyester handelt.

Die erfindungsgemäßen hyperverzweigten Polyester können im Rahmen der vorliegenden Erfindung auch im Gemisch mit anderen Bindemitteln eingesetzt werden. Beispiele für weitere Bindemittel für die erfindungsgemäße Druckfarben umfassen Polyvinylbutyral, Nitrocellulose, Polyamide, Polyacrylate oder Polyacrylat-Copolymere. Besonders vorteilhaft hat sich die Kombination der hyperverzweigten Polyester mit Nitrocellulose erwiesen. Die Gesamtmenge aller Bindemittel in der erfindungsgemäßen Druckfarbe beträgt üblicherweise 5 - 35 Gew.-%, bevorzugt 6 - 30 Gew.-% und besonders bevorzugt 10 - 25 Gew.-% bezogen auf die Summe aller Bestandteile. Das Verhältnis von hyperverzweigtem Polyester zu der Gesamtmenge aller Bindemittel liegt üblicherweise im Bereich von 30 Gew.-% bis 100 Gew.-%, bevorzugt mindestens 40 Gew.-%, wobei aber die Menge an hyperverzweigtem Polyester im Regelfalle 3 Gew. %, bevorzugt 4 Gew. % und besonders bevorzugt 5 Gew. % bezüglich der Summe aller Bestandteile der Druckfarbe nicht unterschreiten sollte.

Es kann ein einzelnes Lösemittel oder auch ein Gemisch mehrerer Lösemittel eingesetzt werden. Als Lösemittel prinzipiell geeignet sind die üblichen Lösemittel für Druckfarben, insbesondere Verpackungsdruckfarben. Insbesondere geeignet als Lösemittel für die erfindungsgemäße Druckfarbe sind Alkohole wie beispielsweise Ethanol, 1-Propanol, 2-Propanol, Ethylenglykol, Propylenglykol, Diethylenglykol, substituierte Alkohole wie beispielsweise Ethoxypropanol, Ester wie beispielsweise Ethylacetat, Isopropylacetat, n-Propyl oder n-Butylacetat. Als Lösungsmittel ist weiterhin Wasser prinzipiell geeignet. Besonders bevorzugt als Lösemittel ist Ethanol bzw. Gemische, die zu einem überwiegenden Teil aus Ethanol bestehen. Unter den prinzipiell möglichen Lösemitteln trifft der Fachmann je nach den Löslichkeitseigenschaften des Polyesters und der gewünschten Eigenschaften der Druckfarbe eine geeignete Auswahl. Es werden üblicherweise 40 bis 80 Gew. % Lösemittel bezüglich der Summe aller Bestandteile der Druckfarbe eingesetzt.

Als Farbmittel können die üblichen Farbstoffe, insbesondere übliche Pigmente eingesetzt werden. Beispiele sind anorganische Pigmente wie beispielsweise Titandioxid-Pigmente oder Eisenoxidpigmente, Interferenzpigmente, Ruße, Metallpulver wie insbesondere Aluminium, Messing oder Kupferpulver, sowie organische Pigmente wie Azo-, Phthalocyanin- oder Isoindolin-Pigmente. Es können selbstverständlich auch Gemische verschiedener Farbstoffe oder Farbmittel eingesetzt werden sowie außerdem lösliche organische Farbstoffe. Es werden üblicherweise 5 bis 25 Gew. % Farbmittel bezüglich der Summe aller Bestandteile eingesetzt.

Die erfindungsgemäße Verpackungsdruckfarbe kann optional weitere Additive und Hilfsstoffe umfassen. Beispiele für Additive und Hilfsstoffe sind Füllstoffe wie Calciumcarbonat, Aluminiumoxidhydrat oder Aluminium- bzw. Magnesiumsilikat. Wachse erhöhen die Abriebfestigkeit und dienen der Erhöhung der Gleitfähigkeit. Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden. Weichmacher dienen der Erhöhung der Elastizität des getrockneten Films. Beispiele sind Phthalsäureester wie Dibutylphthalat, Diisobutylphthalat, Dioctylphthalat, Citronensäureester oder Ester der Adipinsäure. Zum Dispergieren der Pigmente können Dispergierhilfsmittel eingesetzt werden. Bei der erfindungsgemäßen Druckfarbe kann vorteilhaft auf Haftvermittler verzichtet werden, ohne dass die Verwendung von Haftvermittlern damit ausgeschlossen sein soll. Die Gesamtmenge aller Additive und Hilfsstoffe übersteigt üblicherweise nicht 20 Gew. % bezüglich der Summe aller Bestandteile der Druckfarbe und beträgt bevorzugt 0 - 10 Gew. %.

Die Herstellung der erfindungsgemäßen Verpackungsdruckfarbe kann in prinzipiell bekannter Art und Weise durch intensives Vermischen bzw. Dispergieren der Bestandteile in üblichen Apparaturen wie beispielsweise Dissolvern, Rührwerkskugelmühlen oder einem Dreiwalzenstuhl erfolgen. Vorteilhaft wird zunächst eine konzentrierte Pigmentdispersion mit einem Teil der Komponenten und einem Teil des Lösemittels hergestellt, die später mit weiteren Bestandteilen und weiterem Lösemittel zur fertigen Druckfarbe weiter verarbeitet wird.

Ein weiterer bevorzugter Aspekt der vorliegenden Erfindung sind Drucklacke, die mindestens ein Lösemittel oder ein Gemisch verschiedener Lösemittel, mindestens ein polymeres Bindemittel sowie optional weitere Zusatzstoffe umfassen, wobei es sich bei mindestens einem der polymeren Bindemittel um einen erfindungsgemäßen hyperverzweigten hochfunktionellen Polyester handelt, sowie die Verwendung der erfindungsgemäßen Drucklacke zum Grundieren, als Schutzlack sowie zum Herstellen von Mehrschichtmaterialien.

Die erfindungsgemäßen Drucklacke enthalten naturgemäß keine Farbmittel, weisen aber abgesehen davon die gleichen Bestandteile auf wie die bereits geschilderten erfindungsgemäßen Druckfarben. Die Mengen der übrigen Komponenten erhöhen sich dementsprechend.

Überraschenderweise werden durch die Verwendung von Druckfarben, insbesondere Verpackungsdruckfarben, und Drucklacken mit Bindemitteln auf Basis von hyperverzweigten Polyestern, Mehrschichtmaterialien mit hervorragender Haftung zwischen den einzelnen Schichten erhalten. Der Zusatz von Haftvermittlern ist nicht mehr erforderlich. Dabei ist es ganz besonders überraschend, dass ohne Haftvermittler sogar bessere Ergebnisse erzielt werden können, als wenn Haftvermittler zugesetzt werden. Insbesondere auf polaren Folien konnte die Haftung deutlich verbessert werden.

Die Erfindung wird durch Arbeitsbeispiele erläutert. Die analytischen Daten der erfindungsgemäßen Polyester findet man in Tabelle 1.

Beispiel 1

In einen 2-l-Vierhalskolben, der mit einem Wasserabscheider versehen war, wurden Adipinsäure (702 g, 4,8 mol) und Trimethylolpropan (537 g, 4,0 mol) sowie Di-n-butylzinnoxid, kommerziell erhältlich als Fascat ® (2,4 g, 4201 E-Coat, elf atochem), unter Stickstoff in Toluol (200 g) auf 125 bis 130°C erhitzt. Nach einer Reaktionsdauer von 11 h wurde das Toluol unter vermindertem Druck abdestilliert. Man erhielt einen farblosen, viskosen Polyester, der gut löslich in z.B. Butylacetat und THF war.

Beispiel 2

In einem 2-l-Vierhalskolben, der mit einem Wasserabscheider versehen war, wurden Adipinsäure (526 g, 3,6 mol), Trimethylolpropan (537 g, 4,0 mol), Fascat ® (2,1 g) in Toluol (200 g) auf 125 bis 140°C unter Stickstoff erhitzt. Nach einer Reaktionsdauer von 25 h wurde das Toluol unter vermindertem Druck abdestilliert. Man erhielt einen farblosen, viskosen Polyester.

Beispiel 3

Beispiel 1 wurde wiederholt, jedoch wurden die Menge an Adipinsäure (351 g, 2,4 mol), Trimethylolpropan (268 g, 2,0 mol) und Toluol (100 g) halbiert, und als Katalysator wurde Tetra-(2-Ethylhexyl)titanat (1,2 g) anstelle von Di-n-butylzinnoxid (Fascat®) eingesetzt. Nach einer Reaktionsdauer von 6 h wurde das Toluol unter vermindertem Druck abdestilliert. Man erhielt einen farblosen Polyester, , η = 54500 mPa·s (50°C).

Beispiel 4

In einem 1-l-Vierhalskolben, der mit einem Wasserabscheider versehen war, wurden unter Stickstoff Adipinsäure (351 g, 2,4 mol), Trimethylolpropan (268 g, 2,0 mol) und Toluol (20 g) gut vermischt, auf 150°C erhitzt und dabei das entstehende Reaktionswasser abdestilliert. Nach einer Reaktionsdauer von 3 h wurde das Toluol unter vermindertem Druck abdestilliert. Man erhielt einen farblosen, viskosen Polyester.

Beispiel 5

In einem 2-l-Vierhalskolben, der mit einem Wasserabscheider versehen war, wurden Adipinsäure (877 g, 6,0 mol) mit Glycerin (461 g, 5,0 mol) in Gegenwart von Di-n-butylzinnoxid (Fascat®) (3 g) unter Stickstoff in Toluol (200 g) 6 Stunden bei 130°C miteinander umgesetzt. Man erhält ein in Ethanol und in n-Butylacetat gut lösliches Produkt,

$$\eta \;=\; 66.700 \;\; \text{mPa·s} \;\; (50°C)$$

Beispiel 6

In einem 1-l-Vierhalskolben, der mit einem Wasserabscheider versehen war, wurden unter Stickstoff Azelainsäure (94 g, 0,5 mol) zusammen mit Trimethylolpropan (67 g, 0,5 mol) in Toluol (20 g) gelöst. Nach Zugabe von Di-n-butylzinnoxid (Fascat®, 0,32 g) wurde unter Auskreisen des entstehenden Reaktionswassers für 9 h auf 135-140°C erhitzt. Nach Abkühlen auf Raumtemperatur und Abdestillieren des restlichen Toluols erhielt man farblosen Polyester.

Tabelle 1 Reaktionsparameter der Beispiele 1 bis 6 und analytische Daten der erhaltenen Polyester

| Nr. | Verhältnis Carboxyl : OH zu Beginn der Veresterung | | Analytische Daten der Polyester | | | | |
|---|---|---|---|---|---|---|---|
| | | | $M_n$ | $M_w$ | $M_n / M_w$ | Säurezahl [mg KOH/g Polyester] | OH-Zahl |
| 1 | 1,85 | 1 | 1620 | 16170 | 10,0 | 77 | 190 |
| 2 | 0,9 | 1 | 1860 | 16380 | 8,8 | 21 | 309 |

(fortgesetzt)

| Nr. | Verhältnis Carboxyl : OH zu Beginn der Veresterung | | Analytische Daten der Polyester | | | | |
|---|---|---|---|---|---|---|---|
| | | | $M_n$ | $M_w$ | $M_n / M_w$ | Säurezahl [mg KOH/g Polyester] | OH-Zahl |
| 3 | 1,85 | 1 | 1300 | 6370 | 4,9 | 100 | 226 |
| 4 | 1,85 | 1 | 645 | 4453 | 6,9 | 113 | n.b. |
| 5 | 0,8 | 1 | 1810 | 17730 | 9,8 | 100 | n.b. |
| 6 | 1 | 1,5 | 930 | 1671 | 1,8 | 56 | n.b. |
| Die Säurezahl wurde nach bestimmt nach DIN 53402. $M_w$ wurde durch GPC in THF mittels Polystyroleichung bestimmt. n.b.: nicht bestimmt | | | | | | | |

**Patentansprüche**

1. Verfahren zur Herstellung hochfunktioneller, hyperverzweigter Polyester, **dadurch gekennzeichnet, dass** man

   (a) eine oder mehrere Dicarbonsäuren oder eines oder mehrere Derivate derselben mit einem oder mehreren mindestens trifunktionellen Alkoholen
   oder
   (b) eine oder mehrere Tricarbonsäuren oder höhere Polycarbonsäuren oder eines oder mehrere Derivate derselben mit einem oder mehreren Diolen

   in Gegenwart eines Lösemittels und in Gegenwart eines sauren anorganischen, metallorganischen oder organischen Katalysators umsetzt.

2. Verfahren zur Herstellung hochfunktioneller, hyperverzweigter Polyester, **dadurch gekennzeichnet, dass** man

   (a) eine oder mehrere Dicarbonsäuren oder eines oder mehrere Derivate derselben mit einem oder mehreren mindestens trifunktionellen Alkoholen
   oder
   (b) eine oder mehrere Tricarbonsäuren oder Polycarbonsäuren oder eine oder mehrere Derivate derselben mit einem oder mehreren Diolen

   in Gegenwart eines Lösungsmittels und in Abwesenheit von saurem Katalysator umsetzt, wobei man auf den Einsatz von Enzymen verzichtet.

3. Verfahren nach Anspruch 1 oder 2, **dadurch gekennzeichnet, dass** man in Variante (a) einen mindestens trifunktionellen Alkohol einsetzt, der Hydroxylgruppen von mindestens zwei chemisch unterschiedlichen Reaktivitäten aufweist.

4. Verfahren nach Anspruch 1 oder 2, **dadurch gekennzeichnet, dass** man in Variante (a) einen mindestens trifunktionellen Alkohol einsetzt, der Hydroxylgruppen von jeweils chemisch gleicher Reaktivität aufweist.

5. Verfahren nach Anspruch 1 oder 2, **dadurch gekennzeichnet, dass** man in Variante (b) mindestens eine Tricarbonsäure oder Polycarbonsäure einsetzt, die Carboxylgruppen von mindestens zwei unterschiedlichen Reaktivitäten aufweist.

6. Verfahren nach einem der Ansprüche 1 bis 3, **dadurch gekennzeichnet, dass** man als trifunktionellen Alkohol Glycerin einsetzt.

7. Verfahren nach mindestens einem der Ansprüche 1, 2 oder 4, **dadurch gekennzeichnet, dass** man als trifunktionellen Alkohol Trimethylolpropan einsetzt.

**8.** Verfahren nach den Ansprüchen 1 bis 7, **dadurch gekennzeichnet, dass** man als Derivate der Di- Tri- oder Polycarbonsäuren die jeweiligen Methyl- oder Ethylester einsetzt.

**9.** Verfahren nach einem der Ansprüche 1 bis 8, **dadurch gekennzeichnet, dass** man das während der Umsetzung gebildete Wasser, Methanol bzw. Ethanol aus dem Reaktionsgleichgewicht entfernt.

**10.** Verfahren nach einem der Ansprüche 1 bis 9, **dadurch gekennzeichnet, dass** man als Lösemittel Toluol einsetzt.

**Claims**

**1.** A process for preparing high-functionality hyperbranched polyesters which comprises reacting

(a) one or more dicarboxylic acids or one or more derivatives thereof with one or more at least trifunctional alcohols or
(b) one or more tricarboxylic acids or higher polycarboxylic acids, or one or more derivatives thereof with one or more diols

in the presence of a solvent and in the presence of an acidic inorganic, organometallic or organic catalyst.

**2.** A process for preparing high-functionality hyperbranched polyesters which comprises reacting

(a) one or more dicarboxylic acids or one or more derivatives thereof with one or more at least trifunctional alcohols or
(b) one or more tricarboxylic acids or higher polycarboxylic acids, or one or more derivatives thereof with one or more diols

in the presence of a solvent and in the absence of acidic catalyst, forgoing the use of enzymes.

**3.** The process according to claim 1 or 2, wherein in version (a) an at least trifunctional alcohol is used which contains hydroxyl groups of at least two chemically different reactivities.

**4.** The process according to claim 1 or 2, wherein in version (a) an at least trifunctional alcohol is used which contains hydroxyl groups each of chemically identical reactivity.

**5.** The process according to claim 1 or 2, wherein in version (b) at least one tricarboxylic acid or polycarboxylic acid is used which contains carboxyl groups of at least two different reactivities.

**6.** The process according to one of claims 1 to 3, wherein glycerol is used as trifunctional alcohol.

**7.** The process according to one of claims 1, 2 or 4, wherein trimethylolpropane is used as trifunctional alcohol.

**8.** The process according to claims 1 to 7, wherein as derivatives of di- tri- or polycarboxylic acids the respective methyl or ethyl esters are used.

**9.** The process according to one of claims 1 to 8, wherein water, methanol and/or ethanol formed during the reaction is removed from the reaction equilibrium.

**10.** The process according to one of claims 1 to 9, wherein toluene is used as solvent.

**Revendications**

**1.** Procédé de préparation de polyesters hyperramifiés à haute fonctionnalité, **caractérisé en ce qu'**on fait réagir

(a) un ou plusieurs acides dicarboxyliques ou un ou plusieurs de leurs dérivés avec un ou plusieurs alcools au moins trifonctionnels,
ou

(b) un ou plusieurs acides tricarboxyliques ou acides polycarboxyliques supérieurs ou un ou plusieurs de leurs dérivés avec un ou plusieurs diols,

en présence d'un solvant et en présence d'un catalyseur acide inorganique, organométallique ou organique.

**2.** Procédé de préparation de polyesters hyperramifiés à haute fonctionnalité, **caractérisé en ce qu'**on fait réagir

(a) un ou plusieurs acides dicarboxyliques ou un ou plusieurs de leurs dérivés avec un ou plusieurs alcools au moins trifonctionnels,
ou
(b) un ou plusieurs acides tricarboxyliques ou acides polycarboxyliques ou un ou plusieurs de leurs dérivés avec un ou plusieurs diols,

en présence d'un solvant et en absence de catalyseur acide, en renonçant à la mise en oeuvre d'enzymes.

**3.** Procédé suivant la revendication 1 ou 2, **caractérisé en ce qu'**on met en oeuvre, dans la variante (a), un alcool au moins trifonctionnel qui présente des groupes hydroxyle d'au moins deux réactivités chimiquement différentes.

**4.** Procédé suivant la revendication 1 ou 2, **caractérisé en ce qu'**on met en oeuvre, dans la variante (a), un alcool au moins trifonctionnel qui présente des groupes hydroxyle de réactivité respectivement chimiquement identique.

**5.** Procédé suivant la revendication 1 ou 2, **caractérisé en ce qu'**on met en oeuvre, dans la variante (b), au moins un acide tricarboxylique ou acide polycarboxylique qui présente des groupes carboxyle d'au moins deux réactivités différentes.

**6.** Procédé suivant l'une des revendications 1 à 3, **caractérisé en ce que**, comme alcool trifonctionnel, on met en oeuvre de la glycérine,

**7.** Procédé suivant au moins l'une des revendications 1, 2 ou 4, **caractérisé en ce que**, comme alcool trifonctionnel, on met en oeuvre du triméthylolpropane.

**8.** Procédé suivant les revendications 1 à 7, **caractérisé en ce que**, comme dérivés des acides dicarboxyliques, tricarboxyliques ou polycarboxyliques, on met en oeuvre les esters méthyliques ou éthyliques respectifs.

**9.** Procédé suivant l'une des revendications 1 à 8, **caractérisé en ce qu'**on élimine de l'équilibre réactionnel l'eau, le méthanol ou l'éthanol formés pendant la réaction.

**10.** Procédé suivant l'une des revendications 1 à 9, **caractérisé en ce que**, comme solvant, on met en oeuvre du toluène.